# EUROPÄISCHE PATENTANMELDUNG

(11) **EP 2 447 470 A1**
(43) Veröffentlichungstag der Anmeldung: **02.05.2012**
(21) Anmeldenummer: 10189669.4
(22) Anmeldetag: 02.11.2010
(51) Int. Cl.: F01D 5/00

(54) **Bauteilüberprüfung und Verfahren zum Betreiben einer Maschine**

(71) Anmelder: SIEMENS AKTIENGESELLSCHAFT, 80333 München (DE)
(72) Erfinder: Böttcher, Andreas, 40822 Mettmann (DE); Krieger, Tobias, 47226 Duisburg (DE)

(57) **Zusammenfassung**

Durch die Durchführung einer Kernbohrung einer benutzen Bauteil können paralleles Bauteil wieder aufgearbeitet werden und Untersuchungen über den Zustand des Bauteils durchgeführt werden.

## Beschreibung

Die Erfindung betrifft die Überprüfung eines Bauteils nach einem Einsatz in einer Maschine und ein Verfahren zum Betreiben einer Maschine mit wieder aufgearbeiteten Bauteilen.

Bauteile einer Gasturbine werden auf eine bestimmte Lebensdauer ausgelegt und in verschiedenen Inspektionsintervallen auf Schaden untersucht. Dabei ist es ein Ziel, die Restlebensdauer eines Bauteils bis zum Versagen möglichst genau abzuschätzen, um das betroffene Bauteil möglichst optimal und punktgenau kurz vor der Versagensgrenze zu tauschen oder zu reparieren. Eine solche Vorhersage reduziert die Kosten für einen unnötigen Austausch betroffener Komponenten, die noch weit von ihrer Versagensgrenze entfernt sind.

Bisher werden bei verschiedenen Inspektionsintervallen Bauteile optisch auf Risse oder ähnliche Anzeichen einer Betriebsermüdung untersucht. Diese Untersuchung ist sehr ungenau und lässt keine Aussage über die Beschaffenheit des Bauteils im Inneren zu. Des Weiteren werden Bauteile zerstört um eine Aussage über deren Betriebsbeanspruchung und mechanischen Eigenschaften im Inneren zu erlangen. Dies führt dazu, dass Komponenten zwar eingehend untersucht werden können, diese aber nach der Untersuchung nicht wieder eingesetzt werden. Ebenso ist es möglich, dass Bauteile wieder aufgearbeitet werden (rejuvenation) und erneut zum Einsatz kommen.

Es ist daher Aufgabe der Erfindung o. g. Problem zu lösen.

Die Aufgabe wird gelöst durch ein Verfahren gemäß Anspruch 1 und ein Verfahren gemäß Anspruch 14, 15.

In den Unteransprüchen sind weitere vorteilhafte Maßnahmen aufgelistet, die beliebig miteinander kombiniert werden können, um weitere Vorteile zu erzielen.

Es wird vorgeschlagen anhand einer oder mehrerer gezielter Kernbohrungen Proben des Bauteils zu entnehmen und anhand dieser Proben auf die Betriebsbelastung zu schließen. Mit diesem Kern können sämtliche bekannten Untersuchungsmethoden durchgeführt werden, so dass mit Hilfe dieser Ergebnisse eine deutlich genauere Aussage über die Restlebensdauer der Komponente getroffen werden kann. Als Folge können Bauteile näher an die tatsächliche Belastungsgrenze geführt werden und nicht begründete Bauteilwechsel werden vermieden. Die dem Bauteil entnommene Probengeometrie lässt sich vorzugsweise mit einem Pin wieder verschließen, so dass das untersuchte Bauteil wieder für den Betrieb verwendet werden kann.

Es zeigen
- Figur 1 - 4: schematisch Schritte des erfindungsgemäßen Verfahrens,
- Figur 5: eine Turbinenschaufel,
- Figur 6: eine Brennkammer,
- Figur 7: eine Gasturbine und
- Figur 8: eine Liste von Superlegierungen.

Die Figuren und die Beschreibungen stellen nur Ausführungsbeispiele der Erfindung dar.

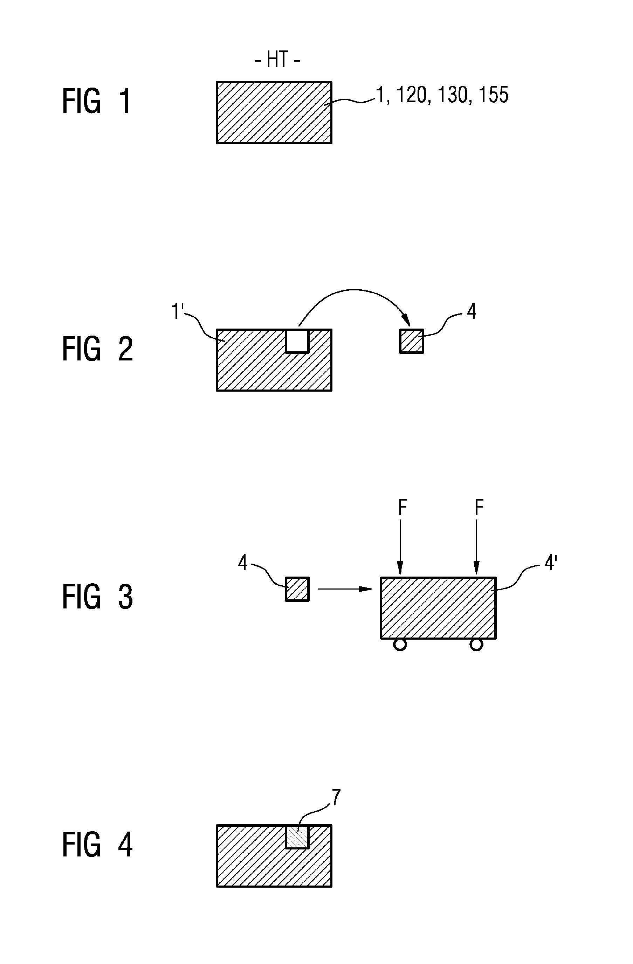

Die Figur 1 zeigt ein Bauteil 1, das hohen Temperaturen (HT) ausgesetzt war.

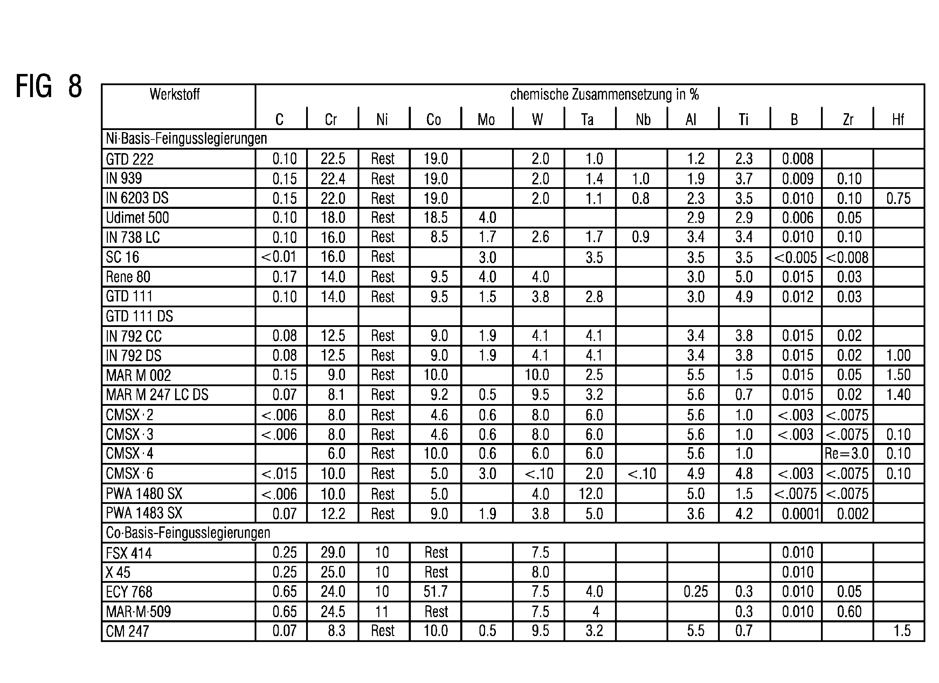

Vorzugsweise ist das Bauteil 1 eine Turbinenschaufel 120, 130, die im Einsatz war und vorzugsweise aus einer Superlegierung, gemäß Figur 8, besteht oder eine solche aufweist. Solche Bauteile 120, 130, 155, die im Hochtemperatureinsatz waren, weisen Schichten auf, die dann für den Neueinsatz entfernt werden. Optional werden auch noch rejuvenation-Maßnahmen (beispielsweise Lösungsglühen und Wiederausscheidung von ausscheidbaren Härtungen) mit dem Bauteil 1, 120, 130, 155 durchgeführt.

Figur 2 zeigt, dass an zumindest einer Stelle zumindest ein Kern 4, insbesondere nur ein Kern 4, dem Bauteil 120, 130 entnommen wird.

Der Kern 4 kann dem Bauteil 1, 120, 130 vor oder nach seiner rejuvenation-Maßnahmen entnommen werden.

Ebenso könne mehrere Kerne 4, insbesondere an verschiedenen Stellen entnommen werden. Damit liegt ein untersuchbarer Kern 4 vor.

Der Kern 4 kann jede beliebige Form haben.

Der Kern 4 kann für die Untersuchungen (chemisch, mechanisch, optisch) auch weiter zerteilt werden und/oder nacheinander benutzt werden.

Ebenso vorzugsweise wird der Kern 4' dieselbe Wärmebehandlungen des rejuvenation wie das Bauteil 1' durchlaufen und dann mechanisch und/oder mikroskopisch untersucht werden. Vorzugsweise werden erst mechanische Test durchgeführt.

Dieser Kern 4 kann, wie in Figur 3 schematisch dargestellt als Probe 4', zur Ermittlung mechanischer Festigkeitswerte unter Beaufschlagung einer Kraft F (LCF, HCF, Festigkeit allgemein) untersucht werden.

Das Bauteil 1, 120, 130, 155 oder das Substrat, dem ein Kern 4 entnommen wurde, wird mit einem Füllmaterial 7 wieder befüllt.

Das Füllmaterial 7 kann vorzugsweise Lotmaterial, Schweißmaterial, ein eingelöteter oder eingeschweißter Pin sein.

Das Verfahren hat den Vorteil, dass das Bauteil 1, 120, 130, 155 schon wieder eingebaut und benutzt werden kann und Aussagen über die tatsächlich mögliche Belastungsgrenze oder Zeitdauer später getroffen werden können, so dass keine Zeitverzögerung beim Wiedereinbau für benutzte Bauteile (120, 130) entstehen, wenn die Untersuchungen zeitintensiv, wie "Low cycle fatigue".

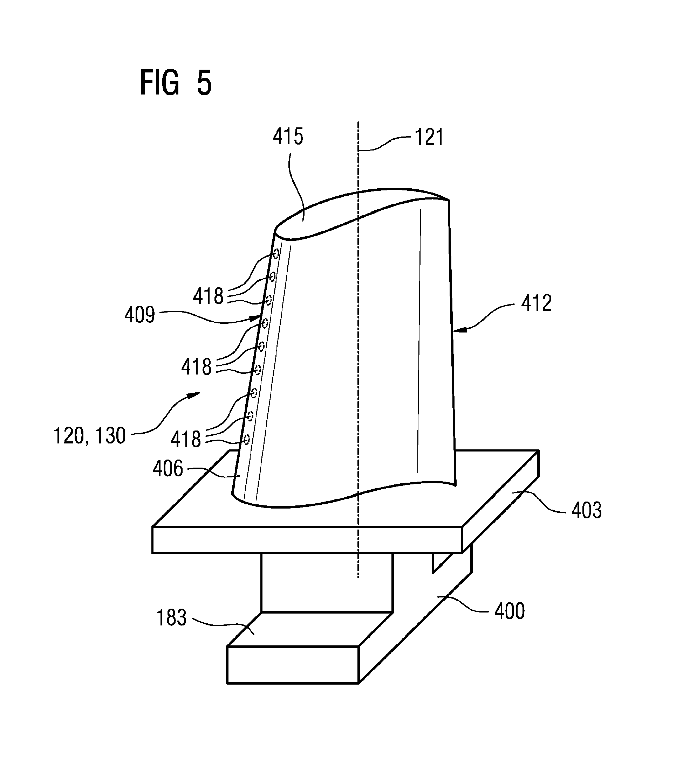

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

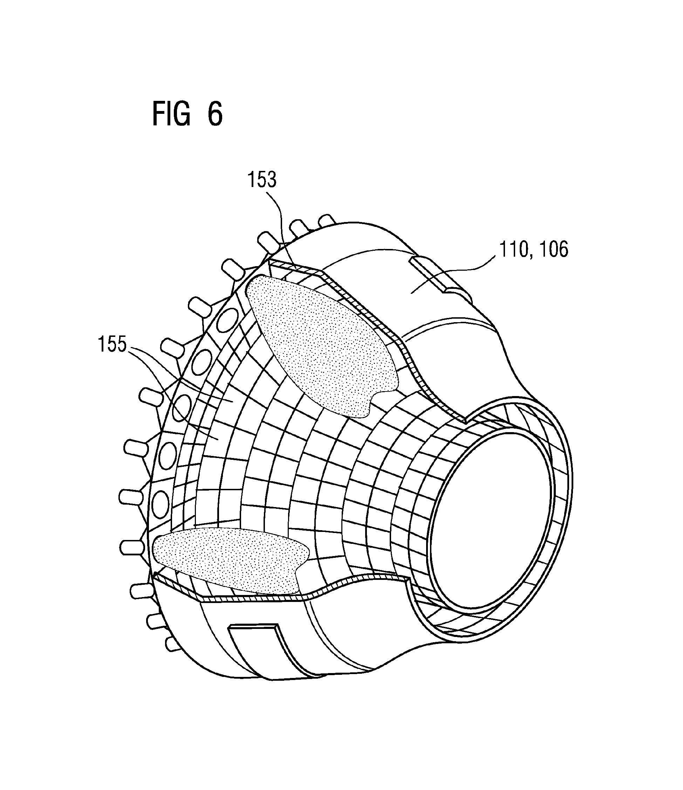

Die Figur 6 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

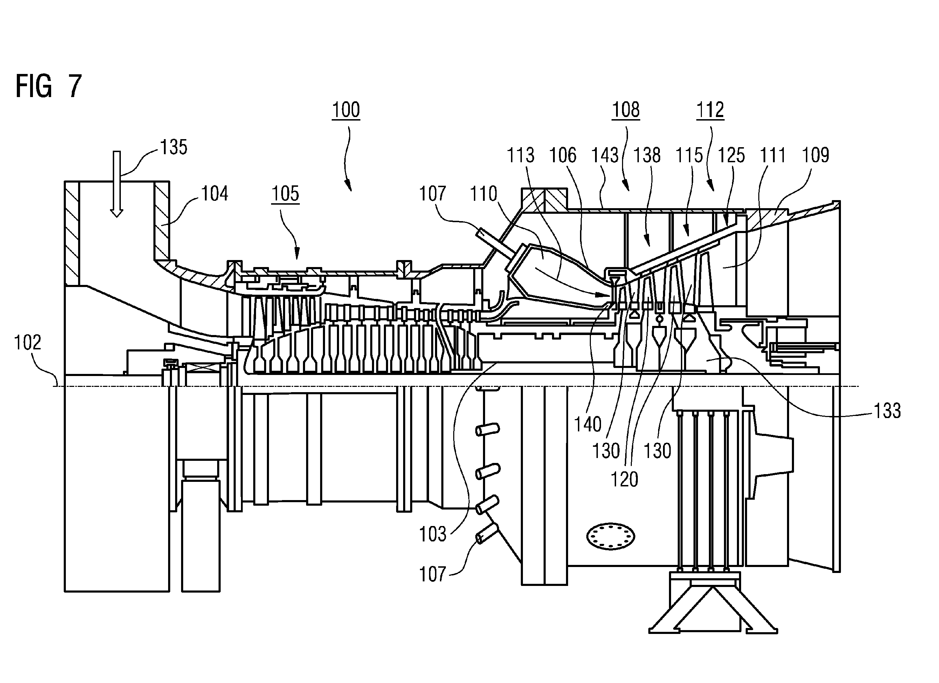

Die Figur 7 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Überprüfung eines Bauteils (1, 120, 130, 155),
insbesondere zur Ermittlung der maximalen Einsatzdauer für den erneuten Einsatz des Bauteils (1, 120, 130, 155),
bei dem dem benutzten Bauteil (1, 120, 130, 155) vor dem Wiedereinsatz (1, 120, 130, 155)
und insbesondere vor der Wiederaufarbeitung an zumindest einer Stelle ein Kern (4) entnommen wird, der (4) untersucht wird und
dessen (14) Untersuchungsergebnisse zur Ermittlung von Einsatzdauer und/oder Belastungsdaten des Bauteils (1, 120, 130, 155) während des erneuten Einsatzes des Bauteils (1, 120, 130, 155) für den erneuten Einsatz herangezogen werden.

2. Verfahren nach Anspruch 1,
bei dem mit dem Kern (4) dieselben Wärmebehandlungen durchgeführt werden wie bei dem Bauteil (1, 120, 130, 155).

3. Verfahren nach Anspruch 1 oder 2,
bei dem mechanische Untersuchungen mit den Kern (4) durchgeführt werden.

4. Verfahren nach Anspruch 1, 2 oder 3,
bei dem chemische Untersuchungen mit dem Kern (4) durchgeführt werden.

5. Verfahren nach Anspruch 1, 2, 3 oder 4,
bei dem metallographische Untersuchungen mit dem Kern (4) durchgeführt werden.

6. Verfahren nach Anspruch 1, 2, 3, 4 oder 5,
bei dem die Stelle,
der der Kern (4) entnommen wurde,
wieder aufgefüllt wird,
insbesondere durch Löten oder Schweißen,
insbesondere mittels eines Pins.

7. Verfahren nach Anspruch 1, 2, 3, 4, 5 oder 6,
bei dem der Kern (4) massiv ausgebildet ist, insbesondere länglich.

8. Verfahren nach Anspruch 1, 2, 3, 4, 5, 6 oder 7,
bei dem an verschiedenen Stellen des Bauteils (1, 120, 130, 155) ein Kern (4) entnommen wird.

9. Verfahren nach Anspruch 1, 2, 3, 4, 5, 6, 7 oder 8, bei dem nur ein Kern (4) entnommen wird.

10. Verfahren nach Anspruch 1, 2, 3, 4, 5, 6, 7 oder 8, bei dem ein Kern (4) für die Untersuchungen in mehrere Teile geteilt wird.

11. Verfahren nach einem oder mehreren der vorhergehenden Ansprüche,
bei dem der Kern (4) vor der Wiederaufbearbeitung entnommen wird.

12. Verfahren nach einem oder mehreren der vorhergehenden Ansprüche 1 bis 10,
bei dem der Kern (4) nach der Wiederaufbearbeitung entnommen wird.

13. Verfahren nach einem oder mehreren der vorhergehenden Ansprüche,
bei dem Wiederaufbearbeitung Entschichten und eine Wärmebehandlung bedeutet,
insbesondere ein Lösungsglühen und eine Ausscheidungswärmebehandlung.

14. Verfahren zum Betreiben einer Maschine (120),
das ein Bauteil (1, 120, 130, 155) aufweist,
bei dem ein Kern (4) dem Bauteil (1, 120, 130, 155) entnommen wird,
insbesondere nach Anspruch 1, 2, 3, 4, 5, 6, 7, 8, 9, 10, 11, 12 oder 13,
bei dem das Bauteil (1, 120, 130, 155) zum Betreiben der Maschine (100) wiederaufgearbeitet wird und
in einer Maschine (100) wieder zum Einsatz kommt und die Untersuchungsergebnisse des Kerns (4) erst nach dem erneuten ersten Einsatz des wiederaufgearbeiteten Bauteils (1, 120, 130, 155) erfolgen.

15. Verfahren zum Betreiben einer Maschine (120),
das ein Bauteil (1, 120, 1301, 155) aufweist,
bei dem ein Kern (4) dem Bauteil (1, 120, 130, 155) entnommen wird,
insbesondere nach Anspruch 1, 2, 3, 4, 5, 6, 7, 8, 9, 10, 11, 12 oder 13,
bei dem das Bauteil (1, 120, 130, 155) zum Betreiben der Maschine (100) wiederaufgearbeitet wird und
in einer Maschine (100) wieder zum Einsatz kommt und die Untersuchungsergebnisse des Kerns (4) vor dem erneuten ersten Einsatz des wiederaufgearbeiteten Bauteils (1, 120, 130, 155) erfolgen.
